Europäisches Patentamt

European Patent Office

Office européen des brevets

(11) Veröffentlichungsnummer: **0 243 592**
**A2**

## (12) EUROPÄISCHE PATENTANMELDUNG

(21) Anmeldenummer: **87101949.3**

(22) Anmeldetag: **12.02.87**

(51) Int. Cl.⁴: **H01S 3/03**

(30) Priorität: **29.04.86 DE 3614471**

(43) Veröffentlichungstag der Anmeldung:
**04.11.87 Patentblatt 87/45**

(84) Benannte Vertragsstaaten:
**AT BE CH DE ES FR GB GR IT LI LU NL SE**

(71) Anmelder: **ELCEDE GMBH**
**Otto-Hahn-Strasse 7**
**D-7312 Kirchheim/Teck(DE)**

(72) Erfinder: **Butenuth, Dieter, Dipl.-Ing.**
**Rechbergweg 4**
**D-7319 Dettingen(DE)**

(74) Vertreter: **Patentanwälte Phys. Bartels**
**Dipl.-Ing. Fink Dr.-Ing. Held**
**Lange Strasse 51**
**D-7000 Stuttgart 1(DE)**

(54) **Gaslaser mit Hochfrequenzanregung.**

(57)
1. Gaslaser mit Hochfrequenzanregung.

2. Das Laserrohr (14) des Gaslasers ist in einem elektrisch an Masse gelegten, metallischen Gehäuse (11) angeordnet, das die eine Elektrode eines Kondensators bildet, dessen zweite Elektrode (41) zusammen mit einem schraubenförmig gewundenen Draht (53) zur Bildung einer Induktivität im Gehäuseinneren angeordnet ist. Die Kapazität und die Induktivität bilden eine LC-Schaltung, um die Impedanz des Lasers an die eines HF-Generators anzupassen. Durch eine Stelleinrichtung (43 bis 45) kann zum Einstellen der Kapazität der Abstand zwischen den beiden Kondensatorelektroden (11 und 41) und durch eine zweite Stelleinrichtung (56 bis 58) zum Einstellen der Induktivität die Länge der vom schraubenförmigen Draht (53) gebildeten Spule eingestellt werden.

Fig.2

## Gaslaser mit Hochfrequenzanregung

Die Erfindung betrifft einen Gaslaser mit Hochfrequenzanregung, dessen Laserrohr in einem elektrisch an Masse gelegten, metallischen Gehäuse angeordnet ist und der für die Hochfrequenzanregung durch einen Hochfrequenzgenerator zwei Elektroden aufweist, die sich längs des Laserrohres einander diametral gegenüberliegend erstrecken und von denen die eine Elektrode elektrisch an Masse liegt und die andere Elektrode mit der Hochfrequenz-Zuleitung verbunden ist, in der eine Filterschaltung mit einstellbarer Induktivität und Kapazität enthalten ist, um die Impedanz des Lasers an die des Hochfrequenzgenerators anzupassen.

Im folgenden werden für "Hochfrequenz" und "Filterschaltung" die gebräuchlichen Abkürzungen "HF" bzw. "LC-Schaltung" benutzt.

Ein kontinuierlicher HF-angeregter Wellenleiter-$CO_2$-Laser mit hoher Frequenzabstimmbarkeit bei hoher Ausgangsleistung ist in der Diplomarbeit von G.Merkle des Instituts für Plasmaforschung der Universität Stuttgart vom Januar 1983 beschrieben. Danach dient die LC-Schaltung dazu, den Imaginärteil (Reduktanz) der Laserimpedanz möglichst = 0 zu machen und den Realteil (Resistanz) dem Innenwiderstand des HF-Generators anzupassen.

Der Erfindung liegt die Aufgabe zu Grunde, für einen Gaslaser dieser Art eine möglichst zweckmäßige Bauweise vorzuschlagen.

Diese Aufgabe ist gemäß der Erfindung bei dem eingangs genannten Gaslaser dadurch gelöst, daß zur Bildung eines Kondensators der Filterschaltung als elektrisch an Masse gelegte erste Elektrode des Kondensators des Lasergehäuse vorgesehen ist, daß die zweite Elektrode des Kondensators im Inneren des Gehäuses angeordnet ist und daß eine Stelleinrichtung zum Einstellen der Kapazität vorhanden ist, mittels deren verschiedene Abstände der zweiten Elektrode von der Wand des Gehäuses einstellbar sind. Dadurch wird erreicht, daß man den einstellbaren Kondensator innerhalb des Lasergehäuses und dadurch sehr raumsparend anordnen kann. Dies ist dann besonders vorteilhaft, wenn eine das Laserrohr in seiner ganzen Länge umhüllende Kühlstoffleitung vorhanden ist, deren Außenwand durch die äußere Wand des Lasergehäuses gebildet ist. Dadurch wird der für das Kühlmittel erforderliche, das Laserrohr umfassende Raum gleichzeitig für die Anordnung des Kondensators der LC-Schaltung benutzt.

Auch kann hierbei das Lasergehäuse gleichzeitig als elektromagnetische Abschirmung des Laserrohres und damit gleichzeitig auch des Kondensators der LC-Schaltung dienen.

Bei einer vorteilhaften Ausführungsform der Erfindung ist vorgesehen, daß die zweite Kondensator-Elektrode an mindestens einem elastisch biegsamen Stab angeordnet ist, der am Lasergehäuse befestigt ist und sich im wesentlichen längs des Laserrohres erstreckt, daß die Stelleinrichtung zum Einstellen der Kapazität ein Stellglied aus einem isolierenden Stoff mit einer zur Laserrohrachse geneigten Fläche aufweist, die die zweite Kondensator-Elektrode berührt, und daß das Stellglied im wesentlichen parallel zur Wand des Lasergehäuses zum Einstellen der verschiedenen Abstände der zweiten Kondensator-Elektrode von der Gehäusewand verschiebbar ist. Dadurch wird die Möglichkeit geschaffen, durch axiales Verschieben des Stellgliedes die Kapazität der LC-Schaltung einzustellen.

Besonders vorteilhaft ist es hierbei, daß das Stellglied zum Einstellen der Kapazität an dem einen Ende einer sich im wesentlichen parallel zum Laserrohr erstreckenden Gewindespindel ausgebildet ist, deren Gewinde mit dem Gewinde eines Gewinderinges kämmt, der vom Lasergehäuse gehalten ist. Eine sehr raumsparende, kompakte Bauweise des Gaslasers erhält man hierbei dadurch, daß die Gewindespindel zum Einstellen der Kapazität als Hülse mit Außengewinde für den gehäusefesten Gewindering ausgebildet ist und zusammen mit dem als Kegelstumpf ausgebildeten Stellglied das Laserrohr in einem radialen Abstand umfaßt und daß mehrere Körper mit kegelstumpfförmiger Innenfläche ausgebildet sind, die in Abständen voneinander mit ihrer Außenfläche dem Lasergehäuse zugekehrt und an der Außenfläche des Stellgliedes anliegend koaxial zu diesem durch die elastisch biegsamen Stäbe gehalten sind, und daß der mit seinem Gewinde mit dem Außengewinde der Hülse im Eingriff stehende Gewindering mit seiner Außenfläche an der Innenfläche des Lasergehäuses befestigt ist.

Ähnlich wie der oben beschriebene Kondensator kann auch das Bauteil für die einstellbare Induktivität allein oder zusammen mit dem Kondensator innerhalb des Lasergehäuses angeordnet sein. Dies kann dadurch erreicht werden, daß als Bauteil für die einstellbare Induktivität der Filterschaltung eine Spule vorgesehen ist, die aus einem - schraubenförmig gewundenen Draht besteht und innerhalb des Lasergehäuses angeordnet ist, und daß eine Stelleinrichtung zum Einstellen der Induktivität vorhanden ist, mittels deren verschiedene Längen der Spule durch Strecken oder Stauchen derselben einstellbar sind.

Hierbei kann in vorteilhafter Weise vorgesehen sein, daß der schraubenförmig gewundene Draht der Spule mit einem Ende an einem vom Lasergehäuse gehaltenen Isolierkörper befestigt ist und mit seinem anderen beweglichen Ende mit einer Schraubenmutter verbunden ist, deren Gewinde mit dem Gewinde einer Gewindespindel im Eingriff steht, die zum Einstellen der Induktivität im Gehäuse axial unverschiebbar und drehbar gelagert ist.

Ähnlich wie bei der Unterbringung des Kondensators im Lasergehäuse kann eine vorteilhafte Ausführungsform der Erfindung dadurch gekennzeichnet sein, daß die Gewindespindel zum Einstellen der Induktivität als Hülse mit Außengewinde für die Schraubenmutter ausgebildet ist, daß diese Hülse, der gewundene Draht der Spule und der als Scheibe ausgebildete, mit dem festen Ende der Spule verbundene gehäusefeste Isolierkörper das Laserrohr in radialem Abstand umfassen und daß die Hülse in der Scheibe drehbar aber axial unverschiebbar gehalten ist.

Besonders vorteilhaft ist es hierbei, die beiden erfindungsgemäßen Lösungswege miteinander zu kombinieren und vorzusehen, daß zur Bildung eines Kondensators der Filterschaltung als elektrisch an Masse gelegte erste Elektrode des Kondensators das Lasergehäuse vorgesehen ist, daß die zweite Elektrode des Kondensators im Inneren des Gehäuses angeordnet ist und daß eine Stelleinrichtung zum Einstellen der Kapazität vorhanden ist, mittels deren verschiedene Abstände der zweiten Elektrode von der Wand des Gehäuses einstellbar sind und daß als Bauteil für die einstellbare Induktivität der Filterschaltung eine Spule vorgesehen ist, die aus einem schraubenförmig gewundenen Draht besteht, die innerhalb des Lasergehäuses angeordnet ist, und daß eine Stelleinrichtung zum Einstellen der Induktivität vorhanden ist, mittels deren verschiedene Längen der Spule durch Strecken oder Stauchen derselben einstellbar sind.

Dies ermöglicht es, das ganze LC-Filter z.B. in der das Laserrohr umhüllenden Kühlstoffleitung unterzubringen.

Die Erfindung ist in der folgenden Beschreibung eines in der Zeichnung dargestellten Ausführungsbeispiels eines Gaslasers im einzelnen erläutert.

Es zeigen:

Fig. 1 eine teilweise im Schnitt dargestellte Seitenansicht des Ausführungsbeispieles;

Fig. 2 einen abgebrochen dargestellten Diametralschnitt des Ausführungsbeispiels nach Fig.1;

Fig. 3 einen Schnitt nach der Linie III - III in Fig.2.

Der in der Zeichnung dargestellte Gaslaser weist ein kreiszylindrisches Stahlrohr 11 auf, das an seinen beiden Enden durch zwei Aluminiumendplatten 12 und 13 verschlossen ist, die zentrale Bohrungen für die Aufnahme des aus Quarzglas hergestellten, das eigentliche Laserrohr 14 bildenden Wellenleiters dienen. Das Laserrohr 14 ist in gasdichten Durchführungen, die durch in der Zeichnung nicht dargestellte O-Ringe gebildet sind, so verschiebbar in den Platten 12 und 13 gehalten, daß eine verschiedene Wärmeausdehnung des Lasergehäuses 11 und des Laserrohres 14 ohne Schaden möglich ist.

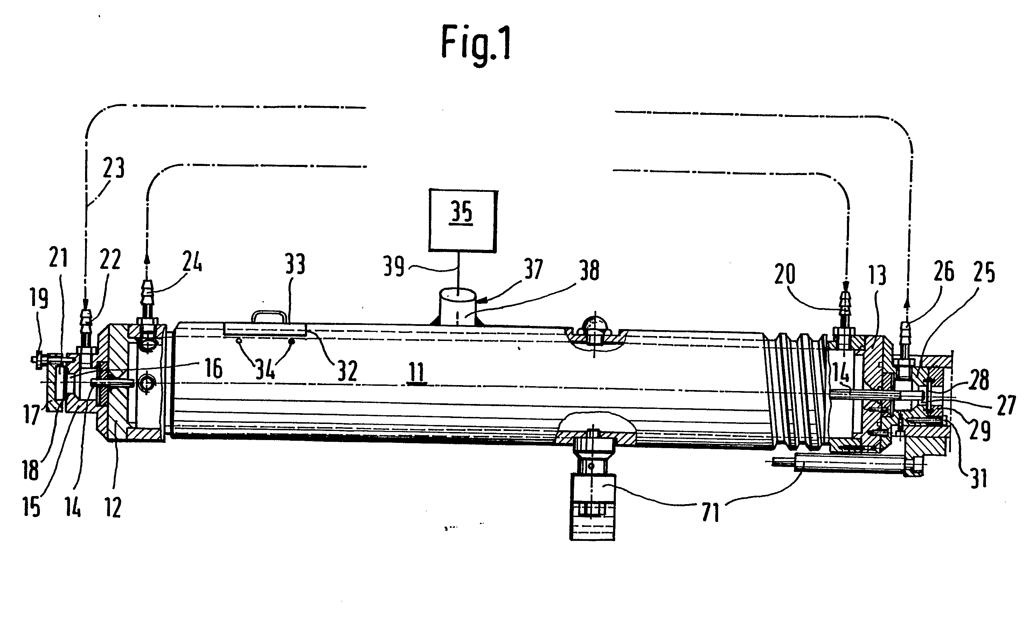

Das aus der Endplatte 12 herausragende Ende des Laserrohres 14 mündet in einen mit der Endplatte 12 gasdicht verbundenen Stutzen 15. Die äußere Öffnung 16 dieses Stutzens ist von einem Deckel 17 gasdicht dadurch verschlossen, daß er unter Zwischenfügung eines Dichtringes 18 mittels Schrauben 19, von denen in Fig.1 nur eine dargestellt ist, mit dem Stutzen 15 verbunden ist. Der Deckel 17 dient gleichzeitig als Halterung eines Endspiegels 21. Eine radiale Öffnung des Stutzens 15 ist mit einem Anschlußstutzen 22 für eine Zuleitung 23 des Lasergases versehen. In dem der Endplatte 12 benachbarten Ende des rohrförmigen Lasergehäuses 11 ist ein Anschlußstutzen 24 für die Ableitung einer Kühlflüssigkeit vorgesehen, die dem Lasergehäuse 11 am anderen Ende durch einen Anschlußstutzen 20 zugeführt wird.

Ähnlich wie die Endplatte 12 ist auch die Endplatte 13 gasdicht mit einem Stutzen 25 verbunden, der einen Anschlußstutzen 26 für die Ableitung des Lasergases aufweist und dessen Öffnung 27 durch einen Spiegel 28 verschlossen ist. Der Spiegel 28 ist am Stutzen 25 unter Zwischenfügung von in Fig.1 nur angedeuteten, an beiden Seiten des Spiegels vorgesehenen Dichtringen gasdicht durch einen Deckelring 29 gehalten, der mit dem Stutzen 25 durch Schrauben 31 gehalten ist, von denen in Fig.1 nur eine dargestellt ist. Der Spiegel 28 ist teilweise durchlässig, um die Laserstrahlung für eine Nutzung teilweise durchzulassen.

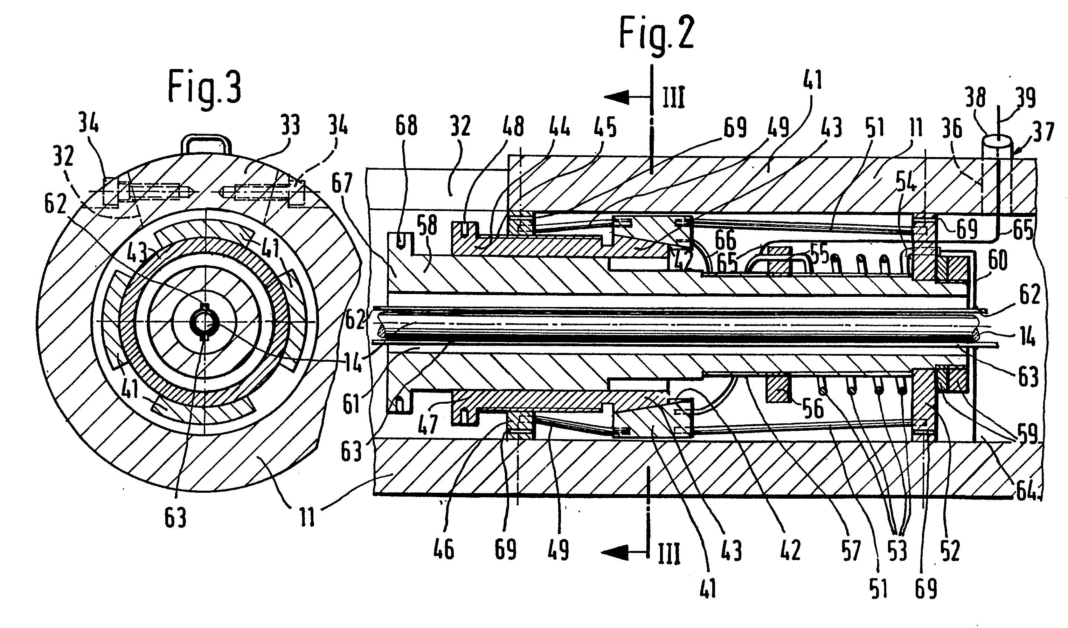

Das Laserrohr 11 weist auf seiner Oberseite eine Öffnung 32 auf, die durch einen Deckel 33 flüssigkeitsdicht verschließbar ist. In Fig.3 ist - schematisch die Verbindung des Deckels 33 mit dem Lasergehäuse 11 durch Schrauben 34 angedeutet.

Die Öffnung 32 dient dazu, bei mit dem Kühlmittel gefülltem Lasergehäuse 11 in diesem angeordnete Bauteile einer einstellbaren Induktivität und Kapazität zur Anpassung der Impedanz des Lasers an die des in Fig.1 nur schematisch angedeuteten HF-Generators 35 anzupassen.

In der Wand des Lasergehäuses 11 ist eine in der Zeichnung schematisch angedeutete HF-Durchführung 36 vorgesehen, die mit einem in den Fig.1 und 2 ebenfalls nur schematisch angedeuteten Koaxialkabel 37 verbunden ist, durch das die HF-Spannung des Generators 35 dem Laser zugeführt wird.

Der rohrförmige elektrisch mit der Masse des HF-Generators 35 verbundene Außenleiter 38 des Koaxialkabels 37 ist mit dem damit ebenfalls elektrisch an Masse gelegten Lasergehäuse 11 verbunden. Der die HF-Spannung führende Innenleiter 39 ist mit den im Inneren des Lasergehäuses angeordneten Bauteilen für eine einstellbare Induktivität und Kapazität der dem Laser vorgeschalteten LC-Schaltung verbunden.

Als Bauteil für die einstellbare Kapazität der LC-Schaltung ist ein Kondensator vorgesehen, dessen als elektrisch an Masse gelegte erste Elektrode das Lasergehäuse 11 ist. Die zweite Elektrode des Kondensators besteht aus vier Sektoren 41 eines Aluminiumzylinderringes, deren Innenflächen 42 durch Teile einer Kegelstumpffläche gebildet sind, die an der kegelstumpfförmigen Außenfläche eines Isolierstoff-Stellgliedes 43 anliegen, das am Ende einer zum Laserrohr 14 koaxialen Hülse ausgebildet ist. Die Hülse 44 ist zur Bildung einer Gewindespindel mit einem Außengewinde 45 versehen, das mit dem Innengewinde eines am Lasergehäuse 11 befestigten Ringes 46 im Eingriff steht.

An dem dem Stellglied 43 abgekehrten Ende der Hülse ist im Bereich der Öffnung 32 des Lasergehäuses 11 ein Stellkopf 47 vorgesehen, der radiale Sackbohrungen zum Einführen eines Stiftes zum Drehen der Hülse 44 und damit zum axialen Verschieben des Stellgliedes 43 aufweist. Die aus Aluminium bestehenden Zylindersektoren 41 sind an elastisch biegsamen Isolierstoffstäben 49 und 51 gehalten. Der Isolierstab 49 ist am Ring 46 und der Isolierstab 51 an einer ringförmigen Scheibe 52 befestigt, die mit ihrem Außenumfang an der Innenwandung des Lasergehäuses 11 ebenso wie der Ring 46 befestigt ist.

Als Bauteil für die einstellbare Induktivität der LC-Schaltung ist eine Spule vorgesehen, die aus einem um das Laserrohr 14 in radialem Abstand schraubförmig gewundenen Draht 53 besteht, dessen festes Ende 54 durch die Scheibe 52 hindurchgeführt und damit an dieser befestigt ist. Das andere Ende 55 des Drahtes 53 ist durch eine Isolierstoffmutter 56 hindurchgeführt und damit an dieser befestigt. Die Mutter 56 ist auf das Außengewinde 57 einer koaxial zum Laserrohr 14 in der Hülse 44 geführten Isolierstoffhülse 58 aufgeschraubt. Der Windungsdurchmesser des Drahtes 53 ist größer als der von ihm umfaßte Außendurchmesser der Hülse 58. Die Hülse 58 greift mit einem zylindrischen Teil am Ende des Außengewindes 57 in eine zylindrische Bohrung der Scheibe 52 ein, die an einer am Ende des Außengewindes 57 vorgesehenen Schulter anliegt. Durch Konterschrauben 59 ist die Hülse 58 drehbar aber axial nicht verschiebbar mit der Scheibe 52 verbunden. Der Hohlraum der Hülse 58 ist so groß, daß zwischen der Hülse 58 und dem Laserrohr 14 ein Hohlraum 61 für den Durchfluß des Kühlmittels freibleibt. Der Draht 53 ist ein versilberter Kupferdraht und hat einen Durchmesser von 2 mm, so daß er so steif ist, daß er beim Drehen der Hülse 58 ein Mitdrehen der Mutter 52 verhindert aber ein axiales Verschieben derselben ermöglicht.

Am Laserrohr 14 sind zwei diametral einander gegenüberliegend aus Drähten gebildete Elektroden 62 und 63 befestigt, die sich im wesentlichen über die ganze Länge des im Hohlraum des Laserrohres 11 befindlichen Teiles des Laserrohres 14 erstrecken. Bei der dargestellten Ausführungsform sind die, die Elektroden 62 und 63 bildenden Drähte gerade und parallel zur Achse des Laserrohres angeordnet. Sie können aber in diametral gegenüberliegender Stellung um das Laserrohr mit großer Steigung gewunden sein. Die Elektrode 62 ist mittels einer Leitung 60 mit dem durch die Scheibe 52 durchgeführten Ende 54 des Spulendrahtes 53 verbunden. Die Elektrode 63 ist über eine Leitung 64 mit dem Lasergehäuse 11 verbunden und liegt damit elektrisch an Masse. Der Innenleiter 39 des Koaxialkabels 37 ist über eine Leitung 65 mit dem durch die Mutter 56 hindurchgeführten Ende 55 des Spulendrahtes 52 verbunden, das in einem halbkreisförmigen Bogen mit dem diametral gegenüberliegenden Zylindersektor 41 verbunden ist. Alle vier Zylindersektoren 41 werden von dem Stellglid 43 gegen die federnde Kraft der Stäbe 49 und 51 in Abständen voneinander gehalten und sind durch U-förmig gebogene, biegsame Drähte 66 (Fig.2) zur Bildung einer zweiten Kondensatorelektrode elektrisch miteinander verbunden.

Ebenso wie die Hülse 44 ist auch die Hülse 58 an ihrem im Bereich der Öffnung 32 liegenden Ende mit einem Stellkopf 67 versehen, der den Radialbohrungen 48 entsprechende Radialbohrungen 68 aufweist.

Damit das Kühlmittel auch den die Zylindersektoren 41 und den gewundenen Draht 53 enthaltenden Teil des Hohlraumes des Lasergehäuses 11 durchströmen kann, sind in dem Ring 46 und in der Scheibe 52 in Fig.2 nur angedeutete axiale Bohrungen 69 vorgesehen.

Zum Befestigen des Lasers sind am Laserrohr 11 in Fig.1 dargestellte Halterungen 71 vorgesehen.

Um die Impedanz des beschriebenen Lasers an die des Hochfrequenzgenerators 35 anzupassen, wird bei abgenommenem Deckel 33 das Lasergehäuse 11 über die Zuleitung durch den Anschlußstutzen 25 mit dem Kühlmittel gefüllt. Dann wird durch das Koaxialkabel 37 die Hochfreuqenzspannung dem Laser zugeführt und durch Drehen der Hülsen 44 und 58 werden dann der durch die Zylindersektoren 41 in Verbindung mit dem Lasergehäuse 11 gebildete Kondensator bzw. die durch den gewundenen Draht gebildete Spule der LC-Schaltung entsprechend eingestellt.

Bei dem dargestellten Ausführungsbeispiel ist das Lasergehäuse 11 als kreiszylindrisches Rohr ausgebildet. Es kann aber auch jede beliebige andere, z.B. eine prismatische Form haben. Entsprechend müssen dann die die zweite Kondensatorelektrode bildenden Körper entsprechende, den Innenwandungen des Lasergehäuses 11 parallele Außenflächen besitzen. Durch das schraubenförmige Winden der Elektroden 62 und 63 um das Laserrohr 14 werden diese durch die Leitungen 60 bzw. 64 auf dem Laserrohr festgehalten, so daß eine andere Befestigungsart nicht notwendig ist. Die dargestellten geraden Elektroden 62 und 63 können durch Baumwollfäden auf dem Laserrohr festgebunden werden.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

**Ansprüche**

1. Gaslaser mit Hochfrequenz-Anregung, dessen Laserrohr (14) in einem elektrisch an Masse gelegten, metallischen Gehäuse (11) angeordnet ist und der für die Hochfrequenzanregung durch einen Hochfrequenzgenerator (35) zwei Elektroden (62,63) aufweist, die sich längs des Laserrohres (14) einander diametral gegenüberliegend erstrecken und von denen die eine Elektrode (63) elektrisch an Masse liegt und die andere Elektrode (62) mit der Hochfrequenz-Zuleitung (39) verbunden ist, in der eine Filterschaltung mit einstellbarer Induktivität und Kapazität enthalten ist, um die Impedanz des Lasers an die des Hochfrequenz-Generators (35) anzupassen, dadurch gekennzeichnet, daß zur Bildung eines Kondensators der Filterschaltung als elektrisch an Masse gelegte erste Elektrode des Kondensators das Lasergehäuse (11) vorgesehen ist, daß die zweite Elektrode (41) des Kondensators im Inneren des Gehäuses (11) angeordnet ist und daß eine Stelleinrichtung (43-45) zum Einstellen der Kapazität vorhanden ist, mittels deren verschiedene Abstände der zweiten Elektrode (41) von der Wand des Gehäuses (11) einstellbar sind.

2. Gaslaser nach Anspruch 1, dadurch gekennzeichnet, daß eine das Laserrohr (14) in seiner ganzen Länge umhüllende Kühlstoffleitung vorhanden ist, deren Außenwand durch die äußere Wand des Lasergehäuses (11) gebildet ist.

3. Gaslaser nach Anspruch 1 oder 2, dadurch gekennzeichnet, daß das Lasergehäuse (11) ein zum Laserrohr (14) koaxial angeordnetes Rohr ist.

4. Gaslaser nach einem der Ansprüche 1 bis 4, dadurch gekennzeichnet, daß das Lasergehäuse (11) als elektromagnetische Abschirmung des Laserrohres (14) ausgebildet ist.

5. Gaslaser nach einem der Ansprüche 1 bis 4, dadurch gekennzeichnet, daß die zweite Kondensator-Elektrode (41) an mindestens einem elastisch biegsamen Stab (49,51) angeordnet ist, der am Lasergehäuse (11) befestigt ist und sich im wesentlichen längs des Laserrohres (14) erstreckt, daß die Stelleinrichtung zum Einstellen der Kapazität ein Stellglied (43) aus einem isolierenden Stoff mit einer zur Laserrohrachse geneigten Fläche aufweist, die die zweite Kondensator-Elektrode (41) berührt, und daß das Stellglied im wesentlichen parallel zur Wand des Lasergehäuses (11) zum Einstellen der verschiedenen Abstände der zweiten Kondensator-Elektrode (41) von der Gehäusewand verschiebbar ist.

6. Gaslaser nach Anspruch 5, dadurch gekennzeichnet, daß als zweite Kondensator-Elektrode mindestens ein sich mindestens längs eines Teiles des Laserrohres (14) erstreckender flacher Körper (41) vorgesehen ist.

7. Gaslaser nach Anspruch 6, dadurch gekennzeichnet, daß bei mehreren Körpern (41) diese zur Bildung der zweiten Kondensator-Elektrode miteinander elektrisch verbunden sind.

8. Gaslaser nach einem der Ansprüche 5 bis 7, dadurch gekennzeichnet, daß das Stellglied (43) zum Einstellen der Kapazität und die zweite Kondensator-Elektrode (41) mit kegelstumpfförmigen Flächen aneinanderliegen.

9. Gaslaser nach einem der Ansprüche 5 bis 8, dadurch gekennzeichnet, daß das Stellglied (43) zum Einstellen der Kapazität an dem einen Ende einer sich im wesentlichen parallel zum Laserrohr (14) erstreckenden Gewindespindel (44) ausgebildet ist, deren Gewinde (45) mit dem Gewinde eines Gewinderinges (46) kämmt, der vom Lasergehäuse gehalten ist.

10. Gaslaser nach Anspruch 9, dadurch gekennzeichnet, daß die Gewindespindel zum Einstellen der Kapazität als Hülse (44) mit Außengewinde (45) für den gehäusefesten Gewindering (46) ausgebildet ist und zusammen mit dem als Kegelstumpf ausgebildeten Stellglied (43) das Laserrohr (14) in einem radialen Abstand umfaßt, daß mehrere Körper (41) mit kegelstumpfförmiger Innenfläche ausgebildet sind, die in Abständen voneinander mit ihrer Außenfläche dem Lasergehäuse (11) zugekehrt und an der Außenfläche des Stellgliedes (43) anliegend koaxial zu diesem durch die elastisch biegsamen Stäbe (49,51) gehalten sind, und daß der mit seinem Gewinde mit dem Außengewinde (45) der Hülse (44) im Eingriff stehende Gewindering (46) mit seiner Außenfläche an der Innenfläche des Lasergehäuses (11) befestigt ist.

11. Gaslaser mit Hochfrequenz-Anregung, insbesondere nach einem der Ansprüche 1 bis 10, dadurch gekennzeichnet, daß als Bauteil für die einstellbare Induktivität der Filterschaltung eine Spule vorgesehen ist, die aus einem - schraubenförmig gewundenen Draht (53) besteht und innerhalb des Lasergehäuses (11) angeordnet ist, und daß eine Stelleinrichtung (56-58) zum Einstellen der Induktivität vorhanden ist, mittels deren verschiedene Längen der Spule durch Strecken oder Stauchen derselben einstellbar sind.

12. Gaslaser nach Anspruch 11, dadurch gekennzeichnet, daß der schraubenförmig gewundene Draht (53) der Spule mit einem Ende (54) an einem vom Lasergehäuse (11) gehaltenen Isolierkörper (52) befestigt ist und mit seinem anderen beweglichen Ende (55) mit einer Schraubenmutter (56) verbunden ist, deren Gewinde mit dem Gewinde (57) einer Gewindespindel (58) im Eingriff steht, die zum Einstellen der Induktivität im Gehäuse (11) axial unverschiebbar und drehbar gelagert ist.

13. Gaslaser nach Anspruch 12, dadurch gekennzeichnet, daß die Gewindespindel zum Einstellen der Induktivität als Hülse (58) mit Außengewinde (57) für die Schraubenmutter (56) ausgebildet ist, daß diese Hülse (58), der gewundene Draht (53) der Spule und der als Scheibe (52) ausgebildete, mit dem festen Ende (54) der Spule verbundene gehäusefeste Isolierkörper das Laserrohr (14) in radialem Abstand umfassen und daß die Hülse (58) in der Scheibe (52) drehbar aber axial unverschiebbar gehalten ist.

14. Gaslaser nach einem der Ansprüche 11 bis 13, dadurch gekennzeichnet, daß die Hülse (58) zum Einstellen der Induktivität in der Hülse (44) zum Einstellen der Kapazität drehbar gelagert ist.

15. Gaslaser nach einem der Ansprüche 11 bis 14, dadurch gekennzeichnet, daß das Lasergehäuse (11) ein kreiszylindrisches Rohr ist, daß die Körper Sektoren (41) eines Kreiszylinderrohres sind und zusammen mit den Hülsen (44) in einem radialen Abstand vom Laserrohr (14) koaxial zu diesem angeordnet sind.

16. Gaslaser nach einem der Ansprüche 11 bis 15, dadurch gekennzeichnet, daß die Hülsen (44, 58) mit einem Stellkopf (47,67) versehen sind und daß für die Betätigung der Stellköpfe im Lasergehäuse (11) eine verschließbare Öffnung (32) vorhanden ist.

# Fig.1

0 243 592

Fig.2

Fig.3

ELCEDE ........

Reg.-Nr.: 126 985

0 243 592